# EUROPEAN PATENT APPLICATION

(11) **EP 4 321 272 A1**
(43) Date of publication of application: **14.02.2024**
(21) Application number: 23187767.1
(22) Date of filing: 26.07.2023
(51) Int. Cl.: B21D 39/03, H01M 10/04, H01M 50/533, H01M 50/536, H01M 50/538

(54) **BATTERY AND METHOD FOR MANUFACTURING BATTERY**

(30) Priority: 08.08.2022 JP 2022126044
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A method for manufacturing a battery (10) herein disclosed includes the steps of: preparing a swaging device including a die (110) having a seating part (111), a plurality of fixing parts (112) dividedly arranged on the outer circumferential side in the radial direction of the seating part (111), and a plurality of movable parts (113) respectively arranged between the plurality of fixing parts (112), and movable toward the outer circumferential side in the radial direction, and a punch (120) to be press-fitted to the seating part (111) of the die (110); and stacking the first metallic plate (42, 52), the metal foil lamination part (21, 22) and the second metallic plat (60, 70) on the die (110) , press-fitting the punch (120) to the seating part (111) of the die (110), and respectively moving the plurality of movable parts (113) toward the outer circumferential side in the radial direction.

## Description

### BACKGROUND OF THE DISCLOSURE

### 1. Field

The present disclosure relates to a battery and a method for manufacturing the same.

### 2. Background

Generally, a battery is configured such that an electrode body having electrodes, and a nonaqueous electrolyte are housed in a battery case. The electrode typically has a metal foil, an active material layer fixed on a partial surface of the metal foil, and a metal foil exposed part at which the active material layer is not formed and the metal foil is exposed. With a battery having such a configuration, a collector sheet is attached to the metal foil exposed part, and the electrode and a terminal are electrically connected with each other via the collector sheet. As related-art literatures related thereto, mention may be made of Japanese Patent Application Publication No. 2009-123440, WO 2019/131356, Japanese Patent Application Publication No. 2015-5456, and Japanese Patent Application Publication No. 2010-73398. For example, Japanese Patent Application Publication No. 2009-123440 discloses welding and joining of the metal foil exposed part and the collector sheet with laser. Further, WO 2019/131356 discloses a configuration in which the metal foil exposed part is bound at one edge of the electrode body to form a metal foil lamination part; and the metal foil lamination part is sandwiched between the collector sheet and a backing plate, and is plastically deformed and swaged.

### SUMMARY

When welding and joining are performed with laser as described in Japanese Patent Application Publication No. 2009-123440, from the viewpoint of preventing dripping of a molten metal and from the viewpoint of keeping the strength of connection, and from other viewpoints, spot welding is generally performed a plurality of times. However, with such a method, unfavorably, due to the mechanical vibration for performing spot welding a plurality of times, the edge of a metal foil is ruptured, hence foreign matters tend to be generated. Further, with the technology of WO 2019/131356, a swaging device including a die having a simple round-shaped concave part, and a cylindrical punch to be press-fitted into the concave part is used. For this reason, according to a study by the inventors of the present application, there has been a problem of a low strength of connection such as disjoining of the swaged joint by a small tensile force due to shallowing of the interlock. Especially, a battery to be frequently externally applied with a vibration or an impact, as with a battery to be mounted on a mobile unit, is required to be increased in strength of connection, and to be improved in conduction reliability.

The present disclosure has been made in view of the foregoing circumstances. It is the main object thereof to provide a battery improved in conduction reliability, and a manufacturing method thereof.

The present disclosure provides a method for manufacturing a battery, the method including: a member preparing step of preparing an electrode body having a metal foil lamination part including a plurality of metal foils stacked therein, a first metallic plate, and a second metallic plate to be arranged opposed to the first metallic plate; a device preparing step of preparing a swaging device including a die having a seating part, three or more fixing parts dividedly arranged on an outer circumferential side in a radial direction of the seating part, and three or more movable parts respectively arranged between the three or more fixing parts, and movable toward the outer circumferential side in the radial direction, and a punch to be press-fitted to the seating part of the die; and a swaging step of stacking the first metallic plate, the metal foil lamination part, and the second metallic plate in this order on the die, followed by press-fitting the punch to the seating part of the die, and moving the three or more movable parts respectively toward the outer circumferential side in the radial direction, thereby plastically deforming the first metallic plate, the metal foil lamination part, and the second metallic plate, and forming a swaged joint having the same number of interlock parts as that of the movable parts.

With the present disclosure, by using the die having the movable part, the first metallic plate which has plastically flowed in the radial direction can be allowed to bite into the metal foil lamination part for earning the interlock amount. For this reason, as compared with, for example, the case using a simple round-shaped die (not having the movable part) as with WO 2019/131356, the interlock part with a relatively higher strength can be formed. Therefore, even when a stress such as a vibration or an impact is externally applied, a state in which the metal foil lamination part and the first metallic plate are in intimate contact with each other becomes more likely to be kept. As a result, the conductive connection can be kept with stability, so that the conduction reliability can be improved. Further, with the present disclosure, by performing swaging, it is possible to prevent the generation of foreign matters generated upon rupture of the metal foil as compared with the case in which spot welding is performed with laser a plurality of times, as with, for example, Japanese Patent Application Publication No. 2009-123440.

The above and other elements, features, steps, characteristics and advantages of the present application will become more apparent from the following detailed description of the preferred embodiments with reference to the attached drawings.

### BRIEF DESCRIPTION OF THE DRAWINGS

FIG. 1 is an exploded view of a battery;
FIG. 2 is a side view schematically showing the connection between a wound electrode body and an internal terminal of FIG. 1;
FIG. 3 is a longitudinal cross sectional view schematically showing a swaged joint of FIG. 1;
FIG. 4 is a front view schematically showing the swaged joint of FIG. 1;
FIG. 5 is a photograph of a die;
FIG. 6 is a schematic view for illustrating a swaging step;
FIG. 7 is an image of a wound electrode body of example including the swaged joint;
FIG. 8A is a cross sectional SEM observation image of the swaged joint on the positive electrode side; and FIG. 8B is a cross sectional SEM observation image of the swaged joint on the negative electrode side.

### DETAILED DESCRIPTION OF THE PREFERRED EMBODIMENTS

Below, with reference to the accompanying drawings, preferable embodiments of the technology herein disclosed will be described. Incidentally, matters necessary for practicing the present disclosure, except for matters specifically referred to in the present specification (e.g., common structure and manufacturing process of a battery that do not characterize the present disclosure) can be grasped as design matters of those skilled in the art based on the related art in the present field. The present disclosure can be practiced based on the contents disclosed in the present specification, and the technical common sense in the present field.

### Battery 10

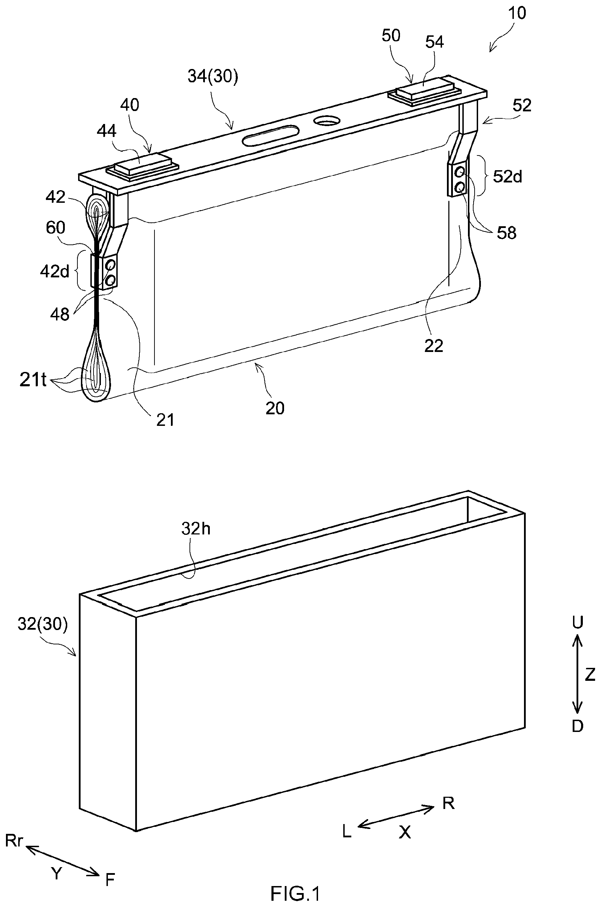

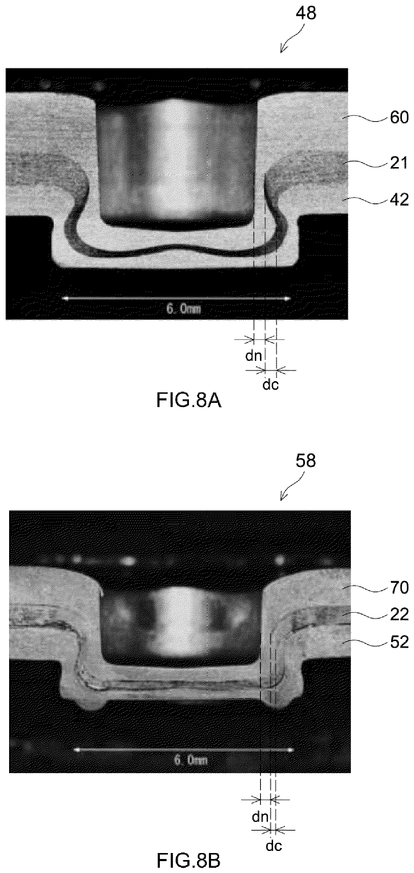

FIG. 1 is an exploded view of a battery 10. The battery 10 includes, an electrode body 20, a battery case 30 having a case main body 32 and a lid body 34, a positive electrode terminal 40 having a positive electrode internal terminal 42 and a positive electrode external terminal 44, a positive electrode auxiliary plate 60, a swaged joint 48, a negative electrode terminal 50 having a negative electrode internal terminal 52 and a negative electrode external terminal 54, a negative electrode auxiliary plate 70 (not shown in FIG. 1, see FIG. 8B), and a swaged joint 58. Although not shown, the battery 10 herein further includes an electrolyte. The battery 10 is configured such that the electrode body 20 and the electrolyte are housed in the battery case 30. The battery 10 has a flat rectangular shape. The battery 10 is typically a secondary battery, and is herein a lithium ion secondary battery.

The battery 10 is characterized by including swaged joints 48 and 58. Other configurations may be the same as those in the related art, and have no particular restriction. Further, although the battery 10 has the two swaged joints 48 and 58, the battery may have only one of the swaged joints 48 and 58 on the positive electrode side or the negative electrode side. In other words, the battery 10 is not required to have the swaged joint 48 or the swaged joint 58. In that case, the positive electrode auxiliary plate 60 or the negative electrode auxiliary plate 70 is unnecessary.

Incidentally, in the present specification, the term "battery" is a term denoting an electric storage device capable of extracting an electric energy therefrom in general, and is a concept including a primary battery and a secondary battery. Further, in the present specification, the term "secondary battery" represents an electric storage device capable of repeatedly charging and discharging by transfer of electric charge carriers between the positive electrode and the negative electrode via an electrolyte in general. The electrolyte may be any of a liquid electrolyte (electrolytic solution), a gel electrolyte, and a solid electrolyte. The secondary battery includes a so-called storage battery (chemical battery) such as a lithium ion secondary battery or a nickel hydrogen battery, and a capacitor (physical battery) such as an electric double layer capacitor.

Incidentally, in the following accompanying drawings, the members/portions producing the same action will be given the same reference numeral and signs, and an overlapping description may be omitted or simplified. Further, in the following accompanying drawings, reference signs U, D, F, Rr, L, and R represent up, down, front, rear, left, and right, respectively. A reference sign X represents the width direction of the battery 10, a reference sign Y represents the depth direction of the battery 10 orthogonal to the reference sign X, and a reference sign Z represents the height direction of the battery 10. These directions, however, are defined merely for the sake of convenience of description, and do not limit in any way how the battery 10 may be installed.

The electrode body 20 is herein a wound electrode body in which a band-shaped positive electrode and a band-shaped negative electrode are stacked via two band-shaped separators, and are wound in the longitudinal direction. However, the electrode body 20 may be a lamination electrode body in which a square-shaped positive electrode and a square-shaped negative electrode are stacked while being insulated from each other.

The positive electrode has a positive electrode collector foil, and a positive electrode mixture layer fixed on the positive electrode collector foil. The positive electrode collector foil includes, for example, a conductive metal such as aluminum, an aluminum alloy, nickel, or a stainless steel. The positive electrode collector foil is herein an aluminum foil. The thickness of one positive electrode collector foil is typically 1 to 100 µm, for example, about 5 to 30 µm, or 10 to 20 µm. The positive electrode mixture layer includes a positive electrode active material (e.g., a lithium transition metal composite oxide) capable of reversibly occluding or releasing electric charge carriers. At the side edge on one side (the left side of FIG. 1) of the electrode body 20 in the width direction X, a plurality of positive electrode tab parts 21t at which the positive electrode mixture layer is not formed and the positive electrode collector foil is exposed are provided.

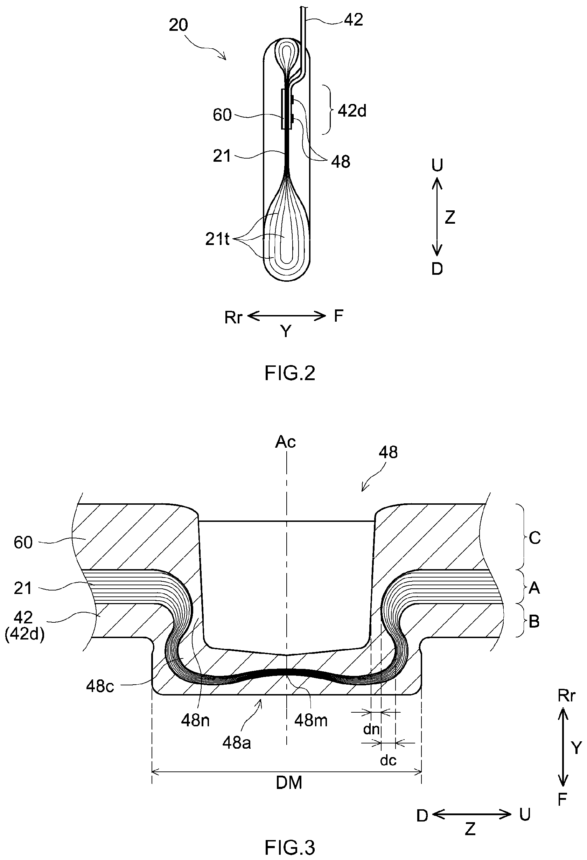

FIG. 2 is a left side view of the electrode body 20. The plurality of positive electrode tab parts 21t are stacked at the left side edge of the electrode body 20, and form the positive electrode collector foil lamination part 21. Although varying according to the design of a battery (e.g., battery capacity), with the high capacity type battery 10, the number of the positive electrode tab parts 21t to be stacked at the positive electrode collector foil lamination part 21 is typically 20 to 100, for example, about 30 to 80. The positive electrode collector foil lamination part 21 is formed by pressurizing the plurality of wound positive electrode tab parts 21t in the depth direction Y. At the positive electrode collector foil lamination part 21, the plurality of positive electrode tab parts 21t are in intimate contact with one another. The positive electrode collector foil lamination part 21 is joined with the positive electrode internal terminal 42 (particularly, a lower edge 42d) in a surface contact state by a plurality of (herein, two) swaged joints 48 described later. The positive electrode collector foil lamination part 21 is one example of the metal foil lamination part including a plurality of metal foils stacked therein.

FIG. 3 is a longitudinal cross sectional view of the swaged joint 48. For the high capacity type battery 10, the thickness of the positive electrode collector foil lamination part 21 (the total thickness of the positive electrode tab parts 21t) A is typically 0.1 to 1.5 mm, for example, about 0.5 to 1.2 mm, or 0.6 to 1 mm. The thickness A of the positive electrode collector foil lamination part 21 is preferably smaller than the thickness (the length in the depth direction Y) B of the positive electrode internal terminal 42 and the thickness (the length in the depth direction Y) C of the positive electrode auxiliary plate 60. As a result of this, the swaged joint 48 with a high strength can be formed with stability.

The negative electrode has a negative electrode collector foil, and a negative electrode mixture layer fixed on the negative electrode collector foil. The negative electrode collector foil includes, for example, a conductive metal such as copper, a copper alloy, nickel, or a stainless steel. The negative electrode collector foil is herein a copper foil. The thickness of one negative electrode collector foil is typically 1 to 100 µm, for example, about 1 to 20 µm, or 5 to 10 µm. The negative electrode mixture layer includes a negative electrode active material (e.g., a carbon material such as graphite) capable of reversibly occluding and releasing electric charge carriers. At the side edge on the other side (the right side of FIG. 1) of the electrode body 20 in the width direction X, a plurality of negative electrode tab parts (not shown) at which the negative electrode mixture layer is not formed and the negative electrode collector foil is exposed are provided.

As shown in FIG. 1, the plurality of negative electrode tab parts is stacked on the right-side edge of the electrode body 20 (i.e., the side edge opposed to the positive electrode collector foil lamination part 21), and form the negative electrode collector foil lamination part 22. Although varying according to the design of a battery (e.g., the battery capacity), for the high capacity type battery 10, the number of the negative electrode tab parts to be stacked at the negative electrode collector foil lamination part 22 is generally substantially the same (about ±2 at maximum) as that of the positive electrode collector foil lamination part 21, and is typically 20 to 100, for example, about 30 to 80. The negative electrode collector foil lamination part 22 is formed by pressurizing the plurality of wound negative electrode tab parts in the depth direction Y as with the positive electrode side. At the negative electrode collector foil lamination part 22, the plurality of negative electrode tab parts is in intimate contact with one another. The negative electrode collector foil lamination part 22 is joined with the negative electrode internal terminal 52 (particularly, a lower edge 52d) in a surface contact state by a plurality of (herein, two) swaged joints 58 described layer. The negative electrode collector foil lamination part 22 is one example of the metal foil lamination part including a plurality of metal foils stacked therein.

For the high capacity type battery 10, the total thickness of the negative electrode collector foil lamination parts 22 is generally smaller than that of the positive electrode collector foil lamination part 21, and is typically 0.2 to 1 mm, for example, about 0.3 to 0.6 mm, or 0.35 to 0.5 mm. The total thickness of the negative electrode collector foil lamination parts 22 is preferably smaller than the thickness (the length in the depth direction Y) of the negative electrode internal terminal 52 and the thickness (the length in the depth direction Y) of the negative electrode auxiliary plate 70.

The separator is an insulating resin sheet including a plurality of microscopic through holes through which electric charge carriers can pass formed therein. The electrolyte is, for example, a nonaqueous electrolytic solution containing a nonaqueous solvent and a support salt such as a lithium salt. However, the electrolyte is in a solid form (solid electrolyte), and may be integrated with the positive electrode and the negative electrode. In this case, the electrode body 20 is not required to have the separator.

The battery case 30 is a casing for housing the electrode body 20 therein. As shown in FIG. 1, the battery case 30 is herein formed in a flat cuboidal shape (rectangular shape) with a bottom. However, in other embodiments, the battery case 30 may be in a given shape such as a cylinder. The battery case 30 includes a metallic material that is lightweight, and has good thermal conductivity such as aluminum, an aluminum alloy, or a stainless steel. The battery case 30 includes a rectangular case main body 32 having an opening 32h at the upper surface, and a plate-shaped lid body 34 for blocking the opening 32h of the case main body 32. To the lid body 34, the positive electrode terminal 40 and the negative electrode terminal 50 are attached. The positive electrode terminal 40 and the negative electrode terminal 50 are arranged at both the left and right edges of the battery 10 in the width direction X, respectively. The battery 10 is charged and discharged via the positive electrode terminal 40 and the negative electrode terminal 50.

The positive electrode terminal 40 is electrically connected with the positive electrode (particularly, the positive electrode collector foil lamination part 21) of the electrode body 20. The positive electrode terminal 40 is made of, for example, a metal such as aluminum, an aluminum alloy, nickel, or a stainless steel. The positive electrode terminal 40 may include the same metal kind as that of the positive electrode collector foil. The positive electrode terminal 40 is herein made of aluminum. The positive electrode terminal 40 has the positive electrode internal terminal 42 extending along the height direction Z, and the plate-shaped positive electrode external terminal 44 extending along the upper surface of the lid body 34. The positive electrode internal terminal 42 is one example of the first metallic plate.

The positive electrode internal terminal 42 has an upper edge (not shown) penetrating through the lid body 34, and exposed to the outside of the battery case 30, and a flat plate-shaped lower edge 42d arranged in the inside of the battery case 30. The positive electrode internal terminal 42 is formed by, for example, bending one metallic plate by press working or the like. The upper edge of the positive electrode internal terminal 42 is connected with the positive electrode external terminal 44 outside the battery case 30. An insulating member (not shown) is arranged between the lid body 34 and the positive electrode external terminal 44, so that the direct contact between the lid body 34 and the positive electrode external terminal 44 is prevented. The lower edge 42d is electrically connected with the positive electrode (particularly, the positive electrode collector foil lamination part 21) by the swaged joint 48.

The thickness of the positive electrode internal terminal 42 (particularly, the thickness of the lower edge 42d) B is typically 0.1 to 2 mm, for example, about 0.2 to 1.5 mm, or 0.3 to 1 mm. As shown in FIG. 3, the thickness B of the positive electrode internal terminal 42 is preferably larger than the thickness A of the positive electrode collector foil lamination part 21 (i.e., A < B). The thickness of the positive electrode internal terminal 42 is preferably smaller than the thickness C of the positive electrode auxiliary plate 60 (i.e., B < C). The thickness A of the positive electrode collector foil lamination part 21, the thickness B of the positive electrode internal terminal 42 (particularly, the lower edge 42d), and the thickness C of the positive electrode auxiliary plate 60 preferably satisfy A < B < C. As a result of this, the swaged joint 48 with a high strength can be formed with stability.

The positive electrode auxiliary plate 60 is arranged opposed to at least the lower edge 42d of the positive electrode internal terminal 42 as shown in FIG. 2. The positive electrode auxiliary plate 60 is in a flat plate shape, and inserts the positive electrode collector foil lamination part 21 together with the lower edge 42d from the depth direction Y The positive electrode auxiliary plate 60 herein has substantially the same area as that of the lower edge 42d in a plan view. However, the positive electrode auxiliary plate 60 may be larger than the lower edge 42d, and, for example, may be substantially as large as the positive electrode internal terminal 42. The positive electrode auxiliary plate 60 is made of, for example, a metal such as aluminum, an aluminum alloy, nickel, or a stainless steel. The positive electrode auxiliary plate 60 may include the same metal kind as that of the positive electrode internal terminal 42. The positive electrode auxiliary plate 60 is herein made of aluminum. The positive electrode auxiliary plate 60 is one example of a second metallic plate.

The thickness C of the positive electrode auxiliary plate 60 may be appropriately adjusted according to the thickness B of the positive electrode internal terminal 42 and the thickness C of the positive electrode auxiliary plate 60. The thickness C of the positive electrode auxiliary plate 60 is typically 0.5 to 5 mm, for example, about 0.7 to 3 mm, or 1 to 2 mm. As shown in FIG. 3, the thickness C of the positive electrode auxiliary plate 60 is preferably larger than the thickness A of the positive electrode collector foil lamination part 21 and the thickness B of the positive electrode internal terminal 42. As a result of this, the swaged joint 48 with a high strength can be formed with stability. Further, the total thickness of the thickness A of the positive electrode collector foil lamination part 21, the thickness B of the positive electrode internal terminal 42 (particularly, the lower edge 42d), and the thickness C of the positive electrode auxiliary plate 60 may be typically 1 mm or more, for example, about 2 to 5 mm or 3 to 4 mm.

The swaged joint 48 is a mechanical joint obtained by plastically deforming the positive electrode internal terminal 42 (particularly, the lower edge 42d), the positive electrode collector foil lamination part 21, and the positive electrode auxiliary plate 60. As a result of this, the positive electrode internal terminal 42, the positive electrode collector foil lamination part 21, and the positive electrode auxiliary plate 60 can be joined with one another with a high strength. Herein, there are a plurality of (specifically two) swaged joints 48. As shown in FIGS. 1 and 2, the two swaged joints 48 are arranged side by side in the height direction Z. However, in other embodiments, the number of the swaged joints 48 may be 1, or may be 3 or more.

As shown in FIG. 3, the swaged joint 48 has a swaged convex part 48a, a neck part 48n, and an interlock part 48c in a cross sectional view in the lamination direction (depth direction Y). The swaged convex part 48a protrudes toward the positive electrode internal terminal 42 side (forward in FIGS. 1 to 3). The swaged convex part 48a includes the positive electrode internal terminal 42 (particularly, the lower edge 42d), the positive electrode collector foil lamination part 21, and the positive electrode auxiliary plate 60. At the central part of the swaged convex part 48a (i.e., the central part of the swaged joint 48) 48m, under the influence from a swaging device 100 (particularly, a die 110), the positive electrode collector foil lamination part 21 bulges in the opposite direction to the swaged convex part 48a (rearward in FIG. 3).

The neck part 48n includes the positive electrode auxiliary plate 60. The neck part 48n forms the inner circumferential part of the swaged joint 48. The neck part 48n extends along the depth direction Y Generally, the swaged joint 48 with a higher strength can be implemented with an increase in thickness (the length in the radial direction) dn of the neck part 48n. For this reason, the thickness dn of the neck part 48n is preferably 0.1 mm or more, more preferably 0.15 mm or more, and further preferably 0.2 mm or more. The thickness dn of the neck part 48n is typically the thickness equal to or smaller than half the thickness of the positive electrode auxiliary plate 60, and may be, for example, 0.5 mm or less, 0.4 mm or less, or 0.3 mm or less.

The interlock part 48c protrudes toward the positive electrode internal terminal 42 side as with the swaged convex part 48a. The interlock part 48c includes the positive electrode collector foil lamination part 21 and the positive electrode auxiliary plate 60. The interlock part 48c is provided along the outer circumferential edge of the neck part 48n. At the interlock part 48c, the positive electrode collector foil lamination part 21 is bent in a S shape, and the positive electrode collector foil lamination part 21 and the positive electrode auxiliary plate 60 are in contact with each other with a sufficient line length. Generally, the swaged joint 48 with a higher strength can be implemented with an increase in thickness (the length in the radial direction) dc of the interlock part 48c. For this reason, the thickness dc of the interlock part 48c is preferably 0.08 mm or more, more preferably 0.1 mm or more, further preferably 0.15 mm or more, and in particular preferably 0.2 mm or more. When the thickness dc of the interlock part 48c is 0.15 mm or more, for example, also in applications where an external force such as a vibration or an impact can be frequently applied during use, such as a vehicle, the battery 10 can be preferably used. Further, when the thickness dc of the interlock part 48c is 0.2 mm or more, even for, for example, a soft metallic material such as pure aluminum, it is possible to implement the swaged joint 48 with a strength as high as a shearing strength (adhesion strength) of 500 N/mm² or more. The thickness dc of the interlock part 48c may be, for example, 0.5 mm or less, 0.4 mm or less, or 0.3 mm or less.

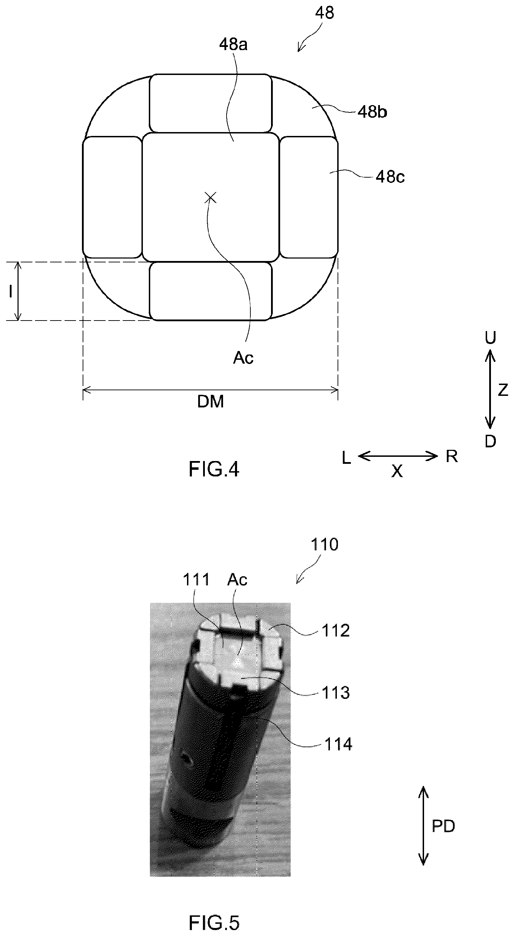

FIG. 4 is a plan view of the swaged joint 48 as seen from the positive electrode internal terminal 42 side (front F in FIG. 1). The outward shape of the swaged joint 48 is substantially a ring shape (particularly, substantially a circular shape) in a plan view. The diameter (joint diameter) DM of the swaged joint 48 is typically about 5 to 10 mm, preferably 6 mm or more, and more preferably 6.5 mm or more. As a result of this, it is possible to form the swaged joint 48 with a high strength and a low resistance. Therefore, it becomes possible to omit welding and joining. The swaged joint 48 is divided into the swaged convex part 48a, the swaged concave part 48b, and the interlock part 48c according to the shape of a swaging device 100 (particularly, the die 110) described later in a plane view.

The swaged convex part 48a is in a substantially quadrangular shape (particularly, a substantially square shape) in a plan view. Incidentally, in the present specification, the term "substantially quadrangular shape" is a term including, for example, even a shape in which the corner part connecting two sides is in an R shape as shown in FIG. 4 in addition to a completely quadrangular shape (e.g., a rectangular shape or a square shape). The swaged convex part 48a is arranged with the axis Ac as the center. The outer edge of the swaged convex part 48a is surrounded by the swaged concave part 48b and the interlock part 48c.

The swaged concave part 48b and the interlock part 48c are arranged dividedly on the outer circumferential side in the radial direction of the swaged convex part 48a. The swaged concave part 48b and the interlock part 48c spread radially from the swaged convex part 48a toward the outer circumference. The swaged concave part 48b and the interlock part 48c are arranged so as to be point symmetrical with the axis Ac as the center. Namely, the swaged joint 48 is formed in a petal shape by alternately arranging the swaged concave part 48b and the interlock part 48c at the outer edge of the swaged convex part 48a. As a result of this, it is possible to the swaged joint 48 with a high strength against an external force applied from various angles.

The swaged concave part 48b is in a substantially fan shape with a central angle of 90° in a plan view. Herein, there are four swaged concave parts 48b, which are arranged at four corners of the swaged convex part 48a, respectively. The interlock part 48c is in a substantially rectangular shape extending in the radial direction of the swaged convex part 48a. The length (the length in the short side direction) I extending in the radial direction of the interlock part 48c is the same length as that of the movable region of the movable part 113 of the die 110 described later. Herein, there are four interlock parts 48c, which are arranged between the four swaged concave parts 48b, respectively. The four interlock parts 48c are arranged in a ring shape (herein, a substantially annular shape). As a result of this, the strength of the interlock can be enhanced.

Incidentally, although the swaged joint 48 herein has the four interlock parts 48c, the number of the interlock parts 48c may only be 3 or more, and may be, for example, 3, 5, or 6 in other embodiments. Further, the shape of the swaged convex part 48a may be a substantially regular triangular shape when the number of the interlock parts 48c is 3; the shape may be a substantially regular pentagonal shape when the number of the interlock parts 48c is 5; and the shape may be a substantially regular hexagonal shape when the number of the interlock parts 48c is 6.

The shearing strength (adhesion strength) of the swaged joint 48 may only be roughly 300 N/mm² or more, preferably 400 N/mm² or more, more preferably 500 N/mm² or more, further desirably 1000 N/mm² or more. As a result of this, for example, also in applications where an external force such as a vibration or an impact can be frequently applied such as a vehicle, the battery 10 can be preferably used. Incidentally, in the present specification, the term "shearing strength" represents the value based on the tensile shearing test according to JIS K6850:1999 (the tensile shearing adhesion strength testing method of rigid adherend).

The negative electrode terminal 50 is electrically connected with the negative electrode of the electrode body 20. The negative electrode terminal 50 is made of, for example, a metal such as copper, a copper alloy, nickel, or a stainless steel. The negative electrode terminal 50 may include the same metal kind as that of the negative electrode collector foil. The negative electrode terminal 50 is herein made of copper. The negative electrode internal terminal 52 may include a metal coated part coated with a metal such as Ni on the surface. The negative electrode internal terminal 52 may be roughened with laser on the surface. The negative electrode terminal 50 has the negative electrode internal terminal 52 extending along the height direction Z, and the plate-shaped negative electrode external terminal 54 extending along the upper surface of the lid body 34. The negative electrode internal terminal 52 is one example of the first metallic plate.

The negative electrode internal terminal 52 has an upper edge (not shown) penetrating through the lid body 34, and exposed to the outside of the battery case 30, and the flat plate-shaped lower edge 52d arranged in the inside of the battery case 30. The negative electrode internal terminal 52 is formed by, for example, bending one metallic plate by press working or the like. The upper edge of the negative electrode internal terminal 52 is connected with the negative electrode external terminal 54 outside the battery case 30. An insulating member (not shown) is arranged between the lid body 34 and the negative electrode external terminal 54, so that the direct contact between the lid body 34 and the negative electrode external terminal 54 is prevented. The lower edge 42d is electrically connected with the negative electrode (particularly, the negative electrode collector foil lamination part 22) by the swaged joint 48.

Although not shown, the thickness (particularly, the thickness of the lower edge 52d) E of the negative electrode internal terminal 52 is typically 0.1 to 2 mm, for example, about 0.3 to 1.5 mm, or 0.5 to 1 mm. As with the positive electrode side, the thickness E of the negative electrode internal terminal 52 is preferably larger than the thickness D of the negative electrode collector foil lamination part 22, and is preferably smaller than the thickness F of the negative electrode auxiliary plate 70. The thickness D of the negative electrode collector foil lamination part 22, the thickness E of the negative electrode internal terminal 52 (particularly, the lower edge 52d), and the thickness F of the negative electrode auxiliary plate 70 preferably satisfy D < E < F as with the positive electrode side. As a result of this, the swaged joint 48 with a high strength can be formed with stability.

The negative electrode auxiliary plate 70 is arranged opposed to at least the lower edge 52d of the negative electrode internal terminal 52 as with the positive electrode side (see FIG. 2). The negative electrode auxiliary plate 70 is in a flat plate shape as with the positive electrode auxiliary plate 60, and inserts the negative electrode collector foil lamination part 22 together with the lower edge 52d from the depth direction Y The negative electrode auxiliary plate 70 herein has substantially the same area as that of the lower edge 52d in a plan view. However, the negative electrode auxiliary plate 70 may be larger than the lower edge 52d, and may be, for example, substantially as large as the negative electrode internal terminal 52. The negative electrode auxiliary plate 70 is made of, for example, a metal such as copper, a copper alloy, nickel, or a stainless steel. The negative electrode auxiliary plate 70 may include the same metal kind as that of the negative electrode internal terminal 52. The negative electrode auxiliary plate 70 is herein made of copper. The negative electrode auxiliary plate 70 is one example of the second metallic plate.

Although not shown, the thickness F of the negative electrode auxiliary plate 70 is typically 0.5 to 5 mm, for example, about 0.7 to 3 mm, or 1 to 2 mm. The thickness F of the negative electrode auxiliary plate 70 is preferably larger than the thickness D of the negative electrode collector foil lamination part 22 and the thickness E of the negative electrode internal terminal 52. As a result of this, the swaged joint 58 with a high strength can be formed with stability. Incidentally, the configuration of the swaged joint 58 is the same as that of the swaged joint 48 on the positive electrode side, and hence a description thereon is omitted.

### Method for manufacturing battery 10

The method for manufacturing the battery 10 is characterized by including a step of forming the swaged joints 48 and 58. In the manufacturing method, the battery 10 can be manufactured using a manufacturing method including, for example, a member preparing step (S1), a device preparing step (S2), and a swaging step (S3) after the member preparing step (S1) and the device preparing step (S2). The manufacturing method herein disclosed may further include another step at a given stage. Incidentally, below, although a description will be given by taking the case where the swaged joint 48 on the positive electrode side is formed as an example, the swaged joint 58 on the negative electrode side can also be formed in the same manner.

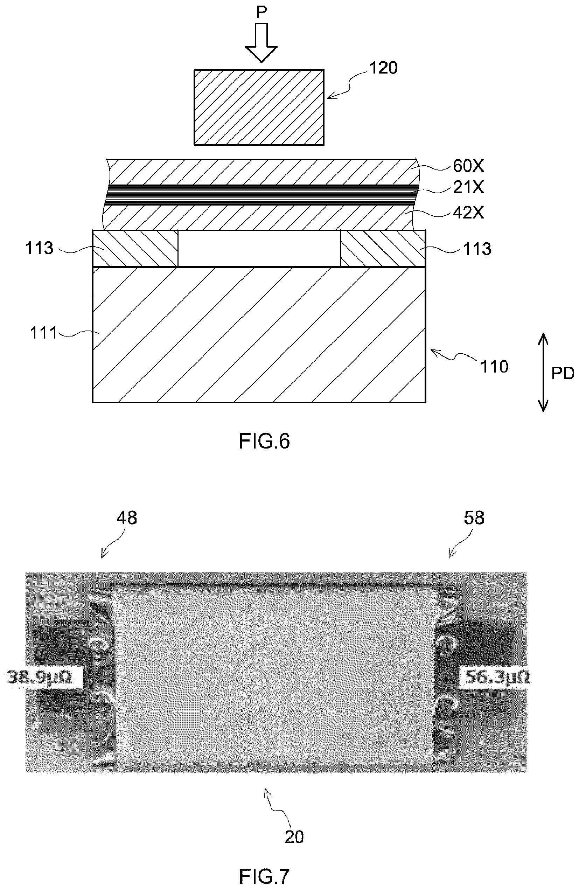

FIG. 5 is a photograph of the die 110 prepared at the device preparing step (S2). FIG. 6 is a schematic view for illustrating the swaging step (S3). In FIG. 6, the positive electrode internal terminal 42, the positive electrode collector foil lamination part 21, and the positive electrode auxiliary plate 60 before forming the swaged joint 48 (before the swaging step) are assumed to be a positive electrode internal terminal 42X, a positive electrode collector foil lamination part 21X, and a positive electrode auxiliary plate 60X, respectively, as distinguished from those after formation thereof. Below, a description will be given while appropriately referring to the drawing.

The member preparing step (S 1) is the step of preparing the electrode body 20 having the positive electrode collector foil lamination part 21X, the positive electrode internal terminal 42X as the first metallic plate, and the positive electrode auxiliary plate 60X as the second metallic plate. The members themselves may be prepared in the same manner as with the related art.

The device preparing step (S2) is the step of preparing the swaging device 100 (see FIG. 6). The swaging device 100 has the die 110, a punch 120, and a moving mechanism (not shown) for moving the punch 120 in the pressing direction PD. The die 110 and the punch 120 are each herein made of a metal. As the die 110 and the punch 120, a commercially available tool set for use in conventionally known TOX (trademark) swaging, for example, TOX (trademark)-SKB can be preferably used. As the die 110, a die with TOX (trademark)-SKB flange can be preferably used.

As shown in FIG. 5, the outward shape of the die 110 is a substantially cylindrical shape. The diameter Φ of the die 110 is typically about 5 to 10 mm, and is preferably 6 mm or more. The die 110 has a seating part 111, a fixing part 112, a movable part 113, and an urging member 114. The seating part 111 is the portion at which the punch 120 described later is seated upon moving in the pressing direction PD. The seating part 111 is arranged with the axis Ac as the center. The seating part 111 is herein in a substantially quadrangular shape (particularly, a substantially square shape). The seating part 111 is in a concave shape recessed from the fixing part 112 and the movable part 113.

The fixing part 112 and the movable part 113 are arranged dividedly on the outer circumferential side in the radial direction of the seating part 111. The fixing part 112 and the movable part 113 are arranged so as to be point symmetrical with respect to the axis Ac as the center. The upper surfaces of the fixing part 112 and the movable part 113 are situated above the upper surface of the seating part 111 in the pressing direction PD. Herein, there are the four fixing parts 112, which are arranged at the four corners of the seating part 111, respectively. The four fixing parts 112 are each in a substantially fan shape with a central angle of 90°. Herein, there are the four movable parts 113, which are arranged between the four fixing parts 112, respectively. The four movable parts 113 are each in a substantially rectangular shape. The four movable parts 113 are each urged by the urging member 114 in the direction approaching the seating part 111. The urging member 114 is, for example, a compression spring. The movable part 113 is configured expandably by being pressurized and moved toward the outer circumferential side in the radial direction by the metallic material when the metallic material has plastically flowed toward the outer circumferential side in the radial direction of the seating part 111 by a pressurizing force P.

Incidentally, the die 110 herein has the four movable parts 113. The number of the movable parts 113 may only be 3 or more that can form a polygon, and may be, for example, 3, 5, or 6 in other embodiments.

The punch 120 is arranged above the seating part 111 of the die 110 as shown in FIG. 6. The punch 120 is configured movably in the direction approaching the die 110, and the direction moving away from the die 110 (the pressing direction PD of FIG. 6) by a moving mechanism not shown. The outward shape of the punch 120 is herein a cylindrical shape. The diameter of the punch 120 is smaller than that of the seating part 111 of the die 110.

The swaging step (S3) is the step of swaging the positive electrode collector foil lamination part 21X, the positive electrode internal terminal 42X, and the positive electrode auxiliary plate 60X. More particularly, this is the step of interlocking a first metallic member 91X, and the positive electrode internal terminal 42X, and forming the interlock part 48c.

As shown in FIG. 6, at the present step, first, the positive electrode internal terminal 42X, the positive electrode collector foil lamination part 21X, and the positive electrode auxiliary plate 60X are mounted on the die 110 from the side closer to the die 110. At this step, the thickness A of the positive electrode collector foil lamination part 21X, the thickness B of the positive electrode internal terminal 42X (particularly, the lower edge 42d), and the thickness C of the positive electrode auxiliary plate 60X preferably satisfy A < B < C. At the time of swaging, the positive electrode auxiliary plate 60X distant from the die 110 (i.e., on the punch 120 side) is largely plastically deformed. For this reason, by increasing the thickness of the positive electrode auxiliary plate 60X, it is possible to prevent too much drawing of the positive electrode auxiliary plate 60X, and to form the swaged joint 48 with stability.

Then, the punch 120 is pressurized, and moved in the pressing direction PD (herein, vertically downward) indicated with an arrow, and the punch 120 is press-fitted to the seating part 111 of the die 110. Although not particularly restricted due to variability according to the metal kind and the thickness of the metal, the pressure at the time of press fitting is preferably set at typically 1 to 30 kN, for example, 5 to 25 kN or 7 to 20 kN. As a result of this, it is possible to form the swaged joint 48 with a high strength of connection with stability.

When the punch 120 is press-fitted to the seating part 111, the positive electrode internal terminal 42X, the positive electrode collector foil lamination part 21X, and the positive electrode auxiliary plate 60X are pressed against the seating part 111 locally with the punch 120. When a pressure is further applied thereto, the metallic material sandwiched between the die 110 and the punch 120 tries to plastically flow toward the outer circumferential side in the radial direction of the seating part 111. As a result of this, the movable part 113 of the die 110 is pressurized and moved toward the outer circumferential side in the radial direction to be expanded. As a result, the metallic material of the positive electrode internal terminal 42X expands toward the outer circumferential side in the radial direction along with expanding of the movable part 113, and bites into the inner surface of the positive electrode collector foil lamination part 21X, resulting in the formation of the interlock part 48c. Further, at the central part of the seating part 111, the positive electrode collector foil lamination part 21X is plastically deformed so as to bulge in the opposite direction to the pressing direction PD. In this manner, the positive electrode internal terminal 42X, the positive electrode collector foil lamination part 21X, and the positive electrode auxiliary plate 60X are plastically deformed following the shape of the space formed by the die 110 and the punch 120, resulting in the formation of the swaged joint 48.

As described up to this point, in the present embodiment, use of the die 110 having the movable part 113 can earn the interlock amount. For this reason, the interlock part 48c with a high strength can be formed. Therefore, even when a stress such as a vibration or an impact is applied externally, the state in which the positive electrode collector foil lamination part 21 and the positive electrode internal terminal 42 are in intimate contact with each other becomes more likely to be kept. As a result, the conductive connection can be kept with stability, so that the conduction reliability can be improved.

### Applications of battery 10

Although the battery 10 can be used for various applications, it can be preferably used for applications where an external force such as a vibration or an impact may be applied during use, typically, as a power source (driving power supply) for a motor to be mounted on various automobiles, for example, a vehicle such as a car or a truck. The kind of the vehicle has no particular restriction. Examples thereof may include a plug-in hybrid automobile (PHEV; Plug-in Hybrid Electric Vehicle), a hybrid automobile (HEV; Hybrid Electric Vehicle), and an electric automobile (BEV; Battery Electric Vehicle).

Below, some examples regarding the present disclosure will be described. However, it is not intended that the present disclosure is limited to such examples.

Herein, as shown in FIG. 7, on the positive electrode side (the left side of FIG. 7) and the negative electrode side (the right side of FIG. 7) of the wound electrode body 20 in accordance with one example, the swaged joints 48 and 58 were manufactured, respectively. Particularly, on the positive electrode side of the wound electrode body 20, the swaged joint (swaged joint on the positive electrode side) 48 was formed at the positive electrode collector foil lamination part 21 made of aluminum. On the negative electrode side of the wound electrode body 20, the swaged joint (the swaged joint on the negative electrode side) 58 was formed at the negative electrode collector foil lamination part 22 made of copper. The representative conditions are shown in Table 1 below. Incidentally, as the die 110 and the punch 120, a commercially available tool set (TOX (trademark)-SKB, the diameter Φ of the die of 6 to 6.3 mm) was used.

### [Table 1]

**Table 1**

| | Collector foil lamination part (21, 22) | | First metallic plate (Internal terminal 42, 52) | | Second metallic plate (Auxiliary plate 60, 70) | | Pressurizing force |
|---|---|---|---|---|---|---|---|
| | Metal foil | Total thickness | Material | Thickness | Material | Thickness | |
| Positive electrode side | Al foil 15µm×66 | 0.99mm | Al | 0.8mm | Al | 1.6mm | 9kN |
| Negative electrode side | Cu foil 6µm×68 | 0.41mm | Cu | 0.8mm | Cu | 1.0mm | 20kN |

Then, the shearing strength and the resistance of the swaged joint were measured, respectively. Further, the cross section of the swaged joint was subjected to SEM observation, thereby calculating the cross sectional dimensions from the cross sectional SEM observation image. The results are shown in Table 2. Further, the cross sectional SEM observation image of the swaged joint 48 on the positive electrode side (of the positive electrode internal terminal 42, the positive electrode collector foil lamination part 21, and the positive electrode auxiliary plate 60) in accordance with one example is shown in FIG. 8A. The cross sectional SEM observation image of the swaged joint 58 on the negative electrode side (of the negative electrode internal terminal 52, the negative electrode collector foil lamination part 22, and the negative electrode auxiliary plate 70) in accordance with one example is shown in FIG. 8B. Incidentally, the shearing strength was measured by the tensile shearing test according to JIS K6850:1999 (rigid adherend tensile shearing adhesion strength testing method). Further, Table 2 shows the resistance values when a welding joint has been formed with conventional ultrasonic welding in place of the swaged joint of the present application altogether for reference.

### [Table 2]

**Table 2**

| | Cross sectional dimension (length in radial direction) | | Shearing strength (N/mm²) | Resistance value (µΩ) | (Reference) Resistance value based on conventional ultrasonic welding ( µΩ) |
|---|---|---|---|---|---|
| | Neck part dn | Interlock part dc | | | |
| Positive electrode side | 0.25mm | 0.26mm | 500 | 38.9 | (68.2) |
| Negative electrode side | 0.24mm | 0.08mm | 1140 | 56.3 | (75.4) |

As shown in Table 2, the resistance value of each swaged joint is lower than that in the case where conventional ultrasonic welding is performed. For this reason, it has been indicated that at the swaged joint, the internal terminal and the collector lamination part are in sufficiently intimate contact with each other. Further, although not particularly described, the thickness of the first metallic plate (internal terminal) and the pressurizing force were made variable, thereby additionally manufacturing a plurality of swaged joints with varied thicknesses dc of the interlock parts. As a result, it has been indicated as follows: when the thickness dc of the interlock part is 0.15 mm or more, the battery can be preferably used even in applications where an external force such as a vibration or an impact may be frequently applied during use, such as a vehicle. Further, it has been indicated as follows: when the thickness dc of the interlock part is 0.2 mm or more, even a soft metallic material such as pure aluminum can implement a swaged joint with a strength as high as a shearing strength (adhesion strength) of 500 N/mm² or more. Still further, in the case using a round tool including a perfect round-shaped die as in, for example, Japanese Patent Application Publication No. 2009-123440, even when, for example, the conditions as shown in Table 1 are variously changed, it was not possible to form a swaged joint with a thickness dc of the interlock part of 0.15 mm or more. Such results show the signification of the technology herein disclosed.

Although the embodiments of the present disclosure have been described thus far, the embodiments are only illustrative, and the present disclosure may be practiced in various other forms. The present disclosure can be practiced based on the contents disclosed in the present specification, and the technical common sense in the present field. The techniques described in the appended claims include various changes and modifications made to the embodiments illustrated above. For example, some of the embodiments can be replaced with other modified aspects, and other modified aspects can also be added to the embodiments. Further, unless described as being essential, the technical feature or features may be appropriately deleted.

### Modified example

In the embodiments, the positive electrode internal terminal 42 and the positive electrode collector foil lamination part 21 are electrically connected with each other through the swaged joint 48, and the negative electrode internal terminal 52 and the negative electrode collector foil lamination part 22 are electrically connected through the swaged joint 58. However, the present disclosure is not limited thereto. From the viewpoint of implementing more excellent electroconductivity, the swaged joint 48 may be further provided with a metal joint obtained by metallurgically joining the positive electrode internal terminal 42 and the positive electrode collector foil lamination part 21. Whereas, the swaged joint 58 may be further provided with a metal joint obtained by metallurgically joining the negative electrode internal terminal 52 and the negative electrode collector foil lamination part 22. The metal joint can be formed by, for example, a method such as welding, fusion welding, pressure welding, thermocompression, or brazing. Out of these, welding such as laser welding, ultrasonic welding, electron beam welding, resistance welding, or TIG (Tungsten Inert Gas) welding is preferable. Namely, the metal joint is preferably a welded joint.

The metal joint is preferably provided inward of the substantially ring-shaped swaged joints 48 and 58. The metal joint can be a relatively lower-rigidity (brittle) joint as compared with the swaged joints 48 and 58. For this reason, by providing the metal joint inward of the swaged joints 48 and 58 (e.g., the swaged convex part 48a), particularly at each central part of the swaged joints 48 and 58, it is possible to keep the metal joint with stability, and to enhance the conduction reliability over a long period.

As described up to this point, specific aspects of the technology herein disclosed include those described in respective clauses below.

Clause 1: A method for manufacturing a battery, the method including: a member preparing step of preparing an electrode body having a metal foil lamination part including a plurality of metal foils stacked therein, a first metallic plate, and a second metallic plate to be arranged opposed to the first metallic plate; a device preparing step of preparing a swaging device including a die having a seating part, three or more fixing parts dividedly arranged on an outer circumferential side in a radial direction of the seating part, and three or more movable parts respectively arranged between the three or more fixing parts, and movable toward the outer circumferential side in the radial direction, and a punch to be press-fitted to the seating part of the die; and a swaging step of stacking the first metallic plate, the metal foil lamination part, and the second metallic plate in this order on the die, followed by press-fitting the punch to the seating part of the die, and moving the three or more movable parts respectively toward the outer circumferential side in the radial direction, thereby plastically deforming the first metallic plate, the metal foil lamination part, and the second metallic plate, and forming a swaged joint having the same number of interlock parts as that of the movable parts.

Clause 2: The manufacturing method according to Clause 1, wherein the relationship of A<B<C is satisfied, where A represents a thickness of the metal foil lamination part, B represents a thickness of the first metallic plate, and C represents a thickness of the second metallic plate.

Clause 3: The manufacturing method according to Clause 1 or 2, wherein the die has the seating part in a substantially square shape in a plan view, the four fixing parts, and the four movable parts.

Clause 4: The manufacturing method according to any one of Clauses 1 to 3, further including: after the swaging step, a metaljoining step of forming a metal joint including the first metallic plate and the metal foil lamination part metal-joined inward of the swaged joint.

Clause 5: A battery including a first metallic plate, a second metallic plate to be arranged opposed to the first metallic plate, an electrode body having a metal foil lamination part including a plurality of metal foils stacked therein, and a swaged joint formed by inserting the metal foil lamination part between the first metallic plate and the second metallic plate, and plastically deforming the metal foil lamination part together with the first metallic plate and the second metallic plate, wherein the swaged joint has, as seen from the first metallic plate side, a swaged convex part protruding toward the first metallic plate side, and three or more interlock parts each in a substantially quadrangular shape dividedly arranged on an outer circumferential side in a radial direction of the swaged convex part, and extending in the radial direction.

Clause 6: The battery according to Clause 5, wherein a relationship A < B < C is satisfied, where A represents a thickness of the metal foil lamination part, B represents a thickness of the first metallic plate, and C represents a thickness of the second metallic plate.

Clause 7: The battery according to Clause 5 or 6, wherein in a cross sectional view in a lamination direction, at the swaged j oint, a length in the radial direction of the interlock part is 0.15 mm or more.

Clause 8: The battery according to any one of Clauses 5 to 7, wherein in a cross sectional view in the lamination direction, at a central part of the swaged joint, the metal foil lamination part bulges in an opposite direction to the swaged convex part.

Clause 9: The battery according to any one of Clauses 5 to 8, wherein the swaged joint has the swaged convex part in a substantially square shape, and the four interlock parts.

Clause 10: The battery according to any one of Clauses 5 to 9, further including a metal joint formed by metal-joining the first metallic plate and the metal foil lamination part to the swaged convex part.

### [Reference Signs List]

- 10: Battery
- 20: Electrode body
- 21: Positive electrode collector foil lamination part (metal foil lamination part)
- 22: Negative electrode collector foil lamination part (metal foil lamination part)
- 40: Positive electrode terminal
- 42: Positive electrode internal terminal (first metallic plate)
- 48: Swaged joint
- 48c: Interlock part
- 50: Negative electrode terminal
- 52: Negative electrode internal terminal (first metallic plate)
- 58: Swaged joint
- 60: Positive electrode auxiliary plate (second metallic plate)
- 70: Negative electrode auxiliary plate (second metallic plate)
- 100: Swaging device
- 110: Die
- 111: Seating part
- 112: Fixing part
- 113: Movable part
- 120: Punch

## Claims

1. A method for manufacturing a battery (10), the method comprising:
a member preparing step (S1) of preparing an electrode body (20) having a metal foil lamination part (21, 22) including a plurality of metal foils stacked therein, a first metallic plate (42, 52), and a second metallic plate (60, 70) to be arranged opposed to the first metallic plate (42, 52);
a device preparing step (S2) of preparing a swaging device (100) including
a die (110) having a seating part (111), three or more fixing parts (112) dividedly arranged on an outer circumferential side in a radial direction of the seating part (111), and three or more movable parts (113) respectively arranged between the three or more fixing parts (112), and movable toward the outer circumferential side in the radial direction, and
a punch (120) to be press-fitted to the seating part (111) of the die (110); and
a swaging step (S3) of stacking the first metallic plate (42, 52), the metal foil lamination part (21, 22), and the second metallic plate (60, 70) in this order on the die (110), followed by press-fitting the punch (120) to the seating part (111) of the die (110), and moving the three or more movable parts (113) respectively toward the outer circumferential side in the radial direction, thereby plastically deforming the first metallic plate (42, 52), the metal foil lamination part (21, 22), and the second metallic plate (60, 70), and forming a swaged joint (48, 58) having the same number of interlock parts (48c) as that of the movable parts (113).

2. The manufacturing method according to claim 1,
wherein a relationship of A < B < C is satisfied, where A represents a thickness of the metal foil lamination part (21, 22), B represents a thickness of the first metallic plate (42, 52), and C represents a thickness of the second metallic plate (60, 70).

3. The manufacturing method according to claim 1 or 2,
wherein the die (110) has the seating part (111) in a substantially square shape in a plan view, the four fixing parts (112), and the four movable parts (113).

4. The manufacturing method according to any one of claims 1 to 3, further comprising: after the swaging step (S3), a metal-joining step (S4) of forming a metal joint including the first metallic plate (42, 52) and the metal foil lamination part (21, 22) metal-joined inward of the swaged joint (48, 58).

5. A battery (10) comprising:
a first metallic plate (42, 52);
a second metallic plate (60, 70) to be arranged opposed to the first metallic plate (42, 52);
an electrode body (20) having a metal foil lamination part (21, 22) including a plurality of metal foils stacked therein; and
a swaged joint (48, 58) formed by inserting the metal foil lamination part (21, 22) between the first metallic plate (42, 52) and the second metallic plate (60, 70), and plastically deforming the metal foil lamination part (21, 22) together with the first metallic plate (42, 52) and the second metallic plate (60, 70),
wherein the swaged joint (48, 58) has, as seen from the first metallic plate (42, 52) side:
a swaged convex part (48a) protruding toward the first metallic plate (42, 52) side; and
three or more interlock parts (48c) each in a substantially quadrangular shape dividedly arranged on an outer circumferential side in a radial direction of the swaged convex part(48a), and extending in the radial direction.

6. The battery (10) according to claim 5,
wherein a relationship A < B < C is satisfied, where A represents a thickness of the metal foil lamination part (21, 22), B represents a thickness of the first metallic plate (42, 52), and C represents a thickness of the second metallic plate (60, 70).

7. The battery (10) according to claim 5 or 6,
wherein in a cross sectional view in a lamination direction, at the swaged joint (48, 58), a length in the radial direction of the interlock part (48c) is 0.15 mm or more.

8. The battery (10) according to any one of claims 5 to 7,
wherein in a cross sectional view in the lamination direction, at a central part of the swaged joint (48, 58), the metal foil lamination part (21, 22) bulges in an opposite direction to the swaged convex part (48a).

9. The battery (10) according to any one of claims 5 to 8,
wherein the swaged joint (48, 58) has the swaged convex part (48a) in a substantially square shape, and the four interlock parts (48c).

10. The battery (10) according to any one of claims 5 to 9, further comprising a metal joint formed by metal-joining the first metallic plate (42, 52) and the metal foil lamination part (21, 22) to the swaged convex part (48a).
